# EUROPÄISCHE PATENTSCHRIFT

(11) **EP 3 426 435 B1**
(45) Veröffentlichungstag und Bekanntmachung des Hinweises auf die Patenterteilung: **26.02.2025**
(21) Anmeldenummer: 17710513.7
(22) Anmeldetag: 08.03.2017
(51) Int. Cl.: B24B 5/36, B24B 5/40, B24B 27/00, B24B 41/04, B23K 37/00, B23K 101/14

(54) **MANIPULATOR UND MANIPULATOREINHEIT**
MANIPULATOR AND MANIPULATOR UNIT
MANIPULATEUR ET UNITÉ DE MANIPULATION

(30) Priorität: 10.03.2016 DE 102016104412
(43) Veröffentlichungstag der Anmeldung: 16.01.2019
(73) Patentinhaber: Framatome GmbH, 91052 Erlangen (DE)
(72) Erfinder: SEEBERGER, Erich, 91091 Großenseebach (DE); HUDELMAIER, Florian, 90429 Nürnberg (DE)
(74) Vertreter: Lavoix
(86) Internationale Anmeldenummer: PCT/EP2017/055458
(87) Internationale Veröffentlichungsnummer: WO 2017/153480

(56) Entgegenhaltungen:
- EP-A1- 0 398 457
- GB-A- 2 122 713
- GB-A- 893 658
- JP-A- H07 227 751
- JP-A- S61 257 756
- US-A- 5 175 964

## Beschreibung

Die Erfindung betrifft einen Manipulator zum Bearbeiten von Schweißnahtwurzeln, insbesondere Schweißnahtwurzeln an rekuperativen Wärmetauschern.

Ein rekuperativer Wärmetauscher hat einen 180°-Krümmer mit einer Halbschalenschweißkonstruktion, d.h. der 180°-Krümmer hat zwei Längsnähte, mit einer unbeschliffenen Schweißnahtwurzel im Innenbereich. Um eine höhere mechanische Belastbarkeit des Krümmers zu erhalten, müssen die Schweißnahtwurzeln beschliffen werden. Diese Schweißnahtwurzeln sind jedoch für ein Schleifwerkzeug schwer zugänglich, da der vorhandene Raum mit 50 x 25 mm für bekannte Schleifwerkzeuge zu klein ist. Daher wird ein Schleifmanipulator in Kleinstbauweise benötigt.

In der GB 893,658 A ist eine Poliermaschine gezeigt, die neben einem sich bewegenden Förderband angebracht ist. Auf dem Förderband können verschiedene Artikel transportiert werden, die poliert werden sollen. Zum Polieren wird ein rotierend bewegtes Polierelement genutzt, welches am Ende eines Schaftes angebracht ist. Der Schaft befindet sich in einem Gehäuse. Das Gehäuse ist über eine Halterung mit einer Hülse verbunden, die höhenverstellbar an einer Säule angebracht ist. Zusätzlich kann die Halterung horizontal verdreht werden, um die Ausrichtung des Polierelements einzustellen. Die Säule kann auf einem Wagen montiert sein, der mittels Rädern auf Schienen beweglich gelagert ist. Auf diese Weise kann das Polierelement die Bewegung eines Artikels auf dem Förderband eine vorbestimmte Strecke lang mitverfolgen.

Die EP 0 398 457 A1 zeigt eine Vorrichtung zur zerspanenden Bearbeitung der Innenoberfläche von Rundschweißnähten in Rohren. Dazu wird ein Geräteträger benutzt, der mit Fahrwerken ausgerüstet ist und sich so in axialer Richtung innerhalb der Rohrleitung bewegen kann. Am Geräteträger ist eine Aufhängung starr befestigt, an der mittels einer Pendelachse eine Werkzeugaufnahme drehbar gelagert ist. Außerdem kann der Geräteträger um eine senkrecht zur Pendelachse liegende Schwenkachse gedreht werden.

Die JP S61 257756 A offenbart eine Schleifvorrichtung, die mittels eines Schleifrades eine Schweißnaht im Inneren eines Gehäuses abträgt. Das Schleifrad befindet sich an einem Einstellmittel, dass über einen Haltearm mit einer Stützeinrichtung verbunden ist. Die Stützeinrichtung ist auf einer Basis angeordnet, die mittels Rädern auf Schienen bewegt werden.

JPH07227751A betrifft eine Poliervorrichtung für die Innenfläche von Rohrleitungen zum Entfernen einer Schweißraupe, die sich entlang der Rohrachse in einem Rohr erstreckt, das mit einem kleinen Durchmesser gekrümmt ist. Eine Vielzahl von Führungsschienenstücken ist miteinander verbunden, so dass sie sich biegen und entlang der Führungsschiene verlaufen können. Eine Poliermaschine mit einer schwenkbaren Schleifmaschine, einem Schleifstein, der schwenkbar auf dem Schlitten angebracht ist und angetrieben wird, um sich um eine zentrale Achse zu drehen, die die Rohrachse schneidet, und die Schleifmaschine gegen den zu polierenden Abschnitt gedrückt wird.

Der hier betrachtete Manipulator umfasst einen Antrieb zur Fortbewegung des Manipulators. Der Manipulator umfasst ferner einen Schleifkopf mit einem Rahmen, an welchem, vorzugsweise vier, erste Räder zum Fortbewegen des Schleifkopfes auf Führungsschienen vorgesehen, insbesondere angebracht, sind, und eine am Schleifkopf vorgesehene, insbesondere angebrachte, Welle, wobei an der Welle eine Schleifscheibe zum Schleifen von Schweißnahtwurzeln, insbesondere Schweißnahtwurzeln eines Wärmetauschers, vorgesehen ist.

Bei bekannten Schleifmanipulatoren besteht jedoch der Nachteil, dass die Schleifscheibe nicht stets in idealen Kontakt mit der Schweißnahtwurzel gebracht werden kann, um ein möglichst gutes Schleifergebnis zu erhalten.

Es ist daher Aufgabe der Erfindung, einen neuen Manipulator anzugeben, insbesondere einen Manipulator mit dem es möglich ist, idealen Kontakt zwischen Schleifscheibe und Schweißnahtwurzel herzustellen. Ferner ist es Aufgabe der Erfindung, eine neue Manipulatoreinheit anzugeben.

Diese Aufgabe wird hinsichtlich des Manipulators gelöst durch die Merkmale des Anspruchs 1 und hinsichtlich der Manipulatoreinheit durch die Merkmale des Anspruchs 11. Vorteilhafte Ausgestaltungen und Weiterbildungen sind in den jeweils abhängigen Ansprüchen angegeben.

Der erfindungsgemäße Manipulator beinhaltet, dass die Welle horizontal und vertikal schwenkbar ist, um die Schleifscheibe gezielt in Kontakt mit der Schweißnahtwurzel zu bringen, und dass die Drehrichtung der Schleifscheibe an der zu bearbeitenden Schweißnahtwurzel senkrecht zur Längserstreckung der zu bearbeiteten Schweißnahtwurzel verläuft.

Unter horizontaler Schwenkbewegung der Welle wird insbesondere eine Bewegung verstanden, die in einer Projektion auf eine von den ersten Rädern aufgespannte und/oder eine vom Rahmen aufgespannte Ebene eine Bewegung in dieser Ebene darstellt. Unter vertikaler Schwenkbewegung der Welle wird eine Bewegung verstanden, die vorzugsweise senkrecht zur vorgenannten Ebene verläuft.

Insbesondere ist ein Winkelbereich von +/- 10°, bevorzugt von +/- 5°, für die horizontale Schwenkbewegung vorgesehen und ein Winkelbereich von 0° bis 10°, bevorzugt von 0° bis 5°, für die vertikale Schwenkbewegung vorgesehen.

Insbesondere kann auch ein Schwenkbereich von +/- 10mm, bevorzugt von +/- 5mm, für die horizontale Schwenkbewegung und ein Schwenkbereich von 0 bis 10mm, bevorzugt von 0 bis 5mm, für die vertikale Schwenkbewegung vorgesehen sein. Insbesondere ist ein derartiger Schwenkbereich für Manipulatoren vorgesehen, die nicht breiter bzw. höher als 50 x 25 mm sind, bzw. deren Wellen eine Länge in einem Größenbereich von 80 bis 100 mm aufweisen.

Durch den mit dem erfindungsgemäßen Manipulator durchführbaren, verbesserten Schleifprozess wird die mechanische Belastbarkeit des rekuperativen Wärmetauschers verbessert. Auf diese Weise wird ebenfalls die Lebensdauer des Wärmetauschers erhöht.

Der Manipulator ist vorzugsweise in Kleinstbauweise gefertigt und hat bevorzugt einen Querschnitt von weniger als 50 x 25 mm.

Gemäß der Erfindung ist vorgesehen, dass der Manipulator am Schleifkopf eine erste Schwenkeinheit für die horizontale Bewegung der Welle umfasst, wobei die erste Schwenkeinheit ein erstes Getriebe, insbesondere ein Schräg-Lineargetriebe, und einen ersten Motor zum Antrieb des ersten Getriebes umfasst.

Ein solches Schräg-Lineargetriebe kann beispielsweise einen Stößel umfassen, welcher von dem Motor linear ein- und ausgefahren werden kann, wobei der Stößel gegen ein Bauteil an der Welle mit einer Schrägfläche abgestützt ist.

Durch das Ausfahren drückt der Stößel gegen die Schrägfläche und die Welle wird horizontal geschwenkt. Zur Rückstellung bzw. zum Schwenken in die andere Richtung kann der Stößel mit der Schrägfläche verbunden sein und diese beim Einfahren des Stößels heranziehen, oder die Rückstellung erfolgt durch eine Federkraft entgegen der Ausfahrrichtung des Stößels.

Ferner ist vorgesehen, dass der Manipulator am Schleifkopf eine zweite Schwenkeinheit für die vertikale Bewegung der Welle umfasst, wobei die zweite Schwenkeinheit ein zweites Getriebe, insbesondere ein Kurvengetriebe, und einen zweiten Motor zum Antrieb des zweiten Getriebes umfasst.

Ein solches Kurvengetriebe kann beispielsweise einen, zum Beispiel tropfenförmigen, Exzenter umfassen, der von dem Motor gedreht wird und an seiner tangentialen Außenfläche mit einem Bauteil an der Welle in Verbindung steht.

Dreht der Motor den Exzenter derart, dass die Außenfläche entgegen dem oder im radial breitesten Bereich des Exzenters gegen das Bauteil drückt, wird die Welle angehoben; dreht der Motor entgegen dem oder im radial schmalsten Bereichs des Exzenters, senkt sich die Welle wieder ab.

Gemäß einer Ausführungsvariante der Erfindung umfasst der Schleifkopf einen Horizontalschlitten und/oder einen Vertikalschlitten zur Lagerung der Welle und der Schleifscheibe, sowie insbesondere der Schwenkeinrichtungen mit Motoren und Getrieben.

Die erste Schwenkeinheit und die zweite Schwenkeinheit sind vorzugsweise in einem, vorzugsweise kombinierten, Schlitten integriert, um die gezielte horizontale und vertikale Bewegung der Welle zu ermöglichen.

Bevorzugt ist eine Halterung für die Welle vorgesehen, wobei die Halterung am Schleifkopf, und insbesondere am oder nahe dem in Vorwärtsbewegungsrichtung des Manipulators hinteren Ende des Schleifkopfes, vorgesehen ist. Bei der Halterung kann es sich insbesondere um ein Schwenklager handeln, um die horizontale und vertikale Bewegung der Welle zu ermöglichen.

Gemäß einer Variante der Erfindung könnte der Antrieb direkt am Schleifkopf vorgesehen sein und beispielsweise einige oder alle seine ersten Räder antreiben.

Gemäß einer bevorzugten Ausführungsvariante der Erfindung ist jedoch vorgesehen, dass der Antrieb wenigstens eine, vorzugweise zwei, Antriebseinheiten zum Anschieben des Schleifkopfes umfasst, wobei jede Antriebseinheit einen Rahmen aufweist, an welchem, vorzugsweise vier, erste Räder zum Fortbewegen der Antriebseinheit auf Führungsschienen vorgesehen, insbesondere angebracht, sind, wobei jede Antriebseinheit mindestens einen Motor zum Antrieb der ersten Räder der Antriebseinheit umfasst.

Es kann vorgesehen sein, dass die wenigstens eine Antriebseinheit und der Schleifkopf und/oder die Antriebseinheiten untereinander durch eine flexible Kupplung verbunden sind, wobei die wenigstens eine Antriebseinheit in Vorwärtsbewegungsrichtung des Manipulators hinter dem Schleifkopf vorgesehen ist. Bei der flexiblen Kupplung kann es sich beispielsweise um einen Faltenbalg oder um Kreuzgelenke handeln.

Die Drehbewegung der Schleifscheibe und/oder der Welle kann von einem dritten Motor, insbesondere einem externen Motor, angetrieben werden. Im Falle eines externen Motors kann die Welle über eine flexible Wellenfortsetzung mit dem externen Motor verbunden sein.

Gemäß einer vorteilhaften und zweckmäßigen Weiterbildung der Erfindung ist vorgesehen, dass zweite Räder zum Befahren der Oberfläche des Wärmetauschers vorgesehen sind, wobei die zweiten Räder am Rahmen, insbesondere an der Außenseite des Rahmens, des Schleifkopfes und/oder am Rahmen, insbesondere an der Außenseite des Rahmens, der wenigstens einen Antriebseinheit vorgesehen, insbesondere angebracht, sind, wobei die zweiten Räder zum Erzeugen eines Anpressdruckes an die Oberfläche des Wärmetauschers vorzugsweise gefedert am jeweiligen Rahmen gelagert sind.

Gemäß einer Weiterbildung der Erfindung ist vorgesehen, dass der Schleifkopf eine Kamera zum Überwachen des Schleifprozesses umfasst, wobei die Kamera in Vorwärtsbewegungsrichtung des Manipulators vor der Schleifscheibe vorgesehen ist, und wobei die Kamera am Rahmen des Schleifkopfes vorgesehen, insbesondere angebracht, ist, und wobei die Kamera vorzugsweise am Rahmen schwenkbar ausgebildet ist.

Ferner kann vorgesehen sein, dass der Schleifkopf eine Beleuchtungsvorrichtung umfasst, insbesondere zur Beleuchtung der abzuschleifenden Schweißnahtwurzel, wobei die Beleuchtungsvorrichtung in Vorwärtsbewegungsrichtung des Manipulators vor der Schleifscheibe vorgesehen ist, und wobei die Beleuchtungsvorrichtung vorzugsweise eine bauliche Einheit mit der Kamera ausbildet.

Bevorzugt umfasst der Manipulator, insbesondere am Schleifkopf und/oder an der oder den Antriebseinheiten, einen Kabelbaum zur Energieversorgung und/oder zur Signalübertragung, wobei der Kabelbaum zur Verbindung des Manipulators mit einer Kontrollstation vorgesehen ist.

Die erfindungsgemäße Manipulatoreinheit umfasst einen erfindungsgemäßen Manipulator, und eine Kontrollstation zur Steuerung, insbesondere Fernsteuerung, des Manipulators.

Gemäß einer Weiterbildung der Manipulatoreinheit ist vorgesehen, dass der Manipulator durch die Kontrollstation fernsteuerbar ist, wobei das horizontale und das vertikale Verschwenken der Welle des Manipulators und/oder Bewegung der ersten Räder der wenigstens einen Antriebseinheit und/oder die Drehgeschwindigkeit der Schleifscheibe durch die Kontrollstation fernsteuerbar ist.

Gemäß einer vorteilhaften und zweckmäßigen Weiterbildung der Manipulatoreinheit ist vorgesehen, dass die Kontrollstation einen Joystick zur Steuerung des Manipulators umfasst, und/oder eine Eingabevorrichtung, und/oder einen Monitor zum Anzeigen der von der Kamera aufgenommenen Bilder und/oder eine Energieversorgung.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen
FIG 1 ein erstes Ausführungsbeispiel des erfindungsgemäßen Manipulators in einer Ansicht von oben;
FIG 2 ein erstes Ausführungsbeispiel des Schleifkopfes des erfindungsgemäßen Manipulators in einer Ansicht von oben;
FIG 3 ein zweites Ausführungsbeispiel des Schleifkopfes des erfindungsgemäßen Manipulators in einer Ansicht von vorne;
FIG 4 ein drittes Ausführungsbeispiel des Schleifkopfes des erfindungsgemäßen Manipulators in einer Ansicht von oben;
FIG 5 ein viertes Ausführungsbeispiel des Schleifkopfes des erfindungsgemäßen Manipulators in einer Seitenansicht.

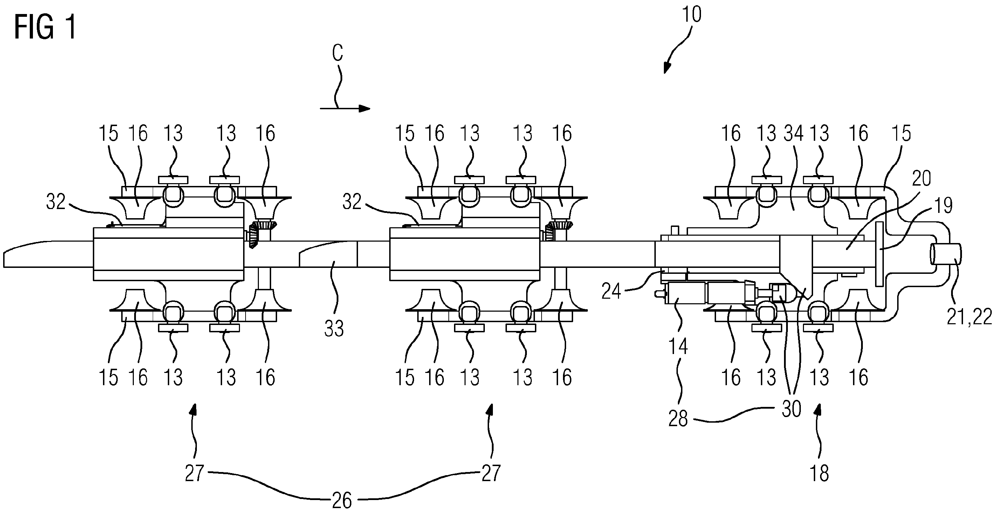

FIG 1 zeigt ein erstes Ausführungsbeispiel des erfindungsgemäßen Manipulators 10 zum Bearbeiten von Schweißnahtwurzeln 11 an rekuperativen Wärmetauschern 12. Der Manipulator 10 umfasst einen Antrieb 26 zum Antrieb der Fortbewegung des Manipulators 10.

Der Antrieb 26 umfasst zwei Antriebseinheiten 27 zum Anschieben des Schleifkopfes 18. Jede Antriebseinheit 27 weist einen Rahmen 15 auf, an welchem vier erste Räder 16 zum Fortbewegen der Antriebseinheit 10 auf Führungsschienen 17 angebracht sind. Jede Antriebseinheit 27 umfasst zudem einen Motor 32 zum Antrieb der ersten Räder 16 der Antriebseinheit 27.

Die Antriebseinheiten 27 und der Schleifkopf 18 und die Antriebseinheiten 27 untereinander sind durch eine flexible Kupplung 33 verbunden, wobei die Antriebseinheiten 27 in Vorwärtsbewegungsrichtung C des Manipulators 10 hinter dem Schleifkopf 18 vorgesehen sind.

FIG 1 bis FIG 5 zeigen, dass der Manipulator einen Schleifkopf 18 mit einem Rahmen 15 umfasst, an welchem vier erste Räder 16 zum Fortbewegen des Schleifkopfes 18 auf Führungsschienen 17 angebracht sind.

Der Manipulator umfasst ferner eine am Schleifkopf 18 angebrachte Welle 20, wobei an der Welle 20 eine Schleifscheibe 19 zum Schleifen von Schweißnahtwurzeln 11 eines Wärmetauschers 12 vorgesehen ist. Die Drehbewegung der Welle 20 kann von einem nicht dargestellten externen Motor ausgehen, mit dem die Welle 20 über eine flexible Wellenfortsetzung (nicht dargestellt) verbunden ist.

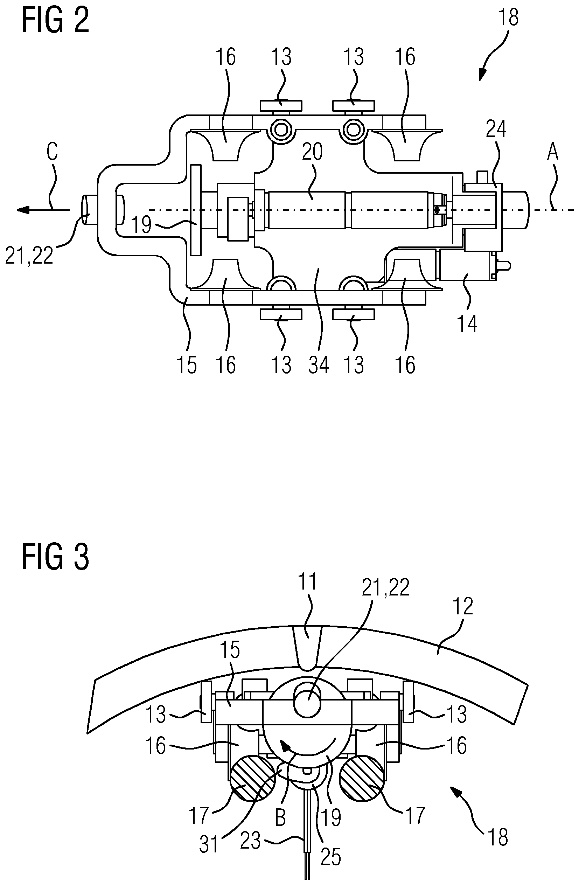

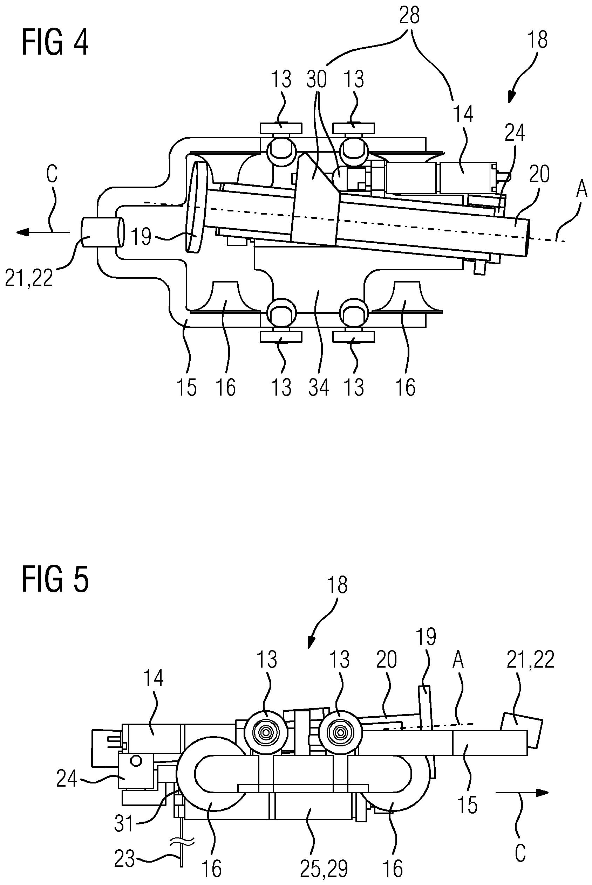

Die Welle 20 ist horizontal und vertikal schwenkbar, um die Schleifscheibe 19 gezielt in Kontakt mit der Schweißnahtwurzel 11 zu bringen. Unter horizontaler Schwenkbewegung wird insbesondere eine Bewegung der Welle verstanden, die in FIG 2 und FIG 4 in der Projektion auf die Zeichenebene zu einer Bewegung in der Zeichenebene führt. FIG 4 zeigt die horizontale Maximalauslenkung der Welle 20 um 5mm nach rechts. Unter vertikaler Schwenkbewegung wird insbesondere eine Bewegung der Welle verstanden, die in FIG 2 und FIG 4 senkrecht zur Zeichenebene und in FIG 5 in der Zeichenebene verläuft. FIG 5 zeigt die vertikale Maximalauslenkung der Welle 20 um 5mm nach oben.

Der Manipulator 10 umfasst am Schleifkopf 18 eine erste Schwenkeinheit 28 für die horizontale Bewegung der Welle 20, wobei die erste Schwenkeinheit 28 ein Schräg-Lineargetriebe 30 und einen ersten Motor 14 zum Antrieb des Schräg-Lineargetriebe 30 umfasst.

Der Manipulator 10 umfasst ferner am Schleifkopf 18 eine zweite Schwenkeinheit 29 für die vertikale Bewegung der Welle 20, wobei die zweite Schwenkeinheit 29 ein Kurvengetriebe 31 und einen zweiten Motor 25 zum Antrieb des Kurvengetriebes 31 umfasst.
ferner ist eine Halterung 24 für die Welle 20 vorgesehen, wobei die Halterung am Schleifkopf 18 und nahe dem in Vorwärtsbewegungsrichtung C des Manipulators hinteren Ende des Schleifkopfes 18 vorgesehen ist. Bei der Halterung 24 handelt es sich um ein Schwenklager, um die horizontale und vertikale Bewegung der Welle 20 zu ermöglichen.

Die Drehrichtung der Schleifscheibe 19 an der zu bearbeitenden Schweißnahtwurzel verläuft senkrecht zur Längserstreckung der zu bearbeitenden Schweißnahtwurzel 11. Der Begriff "senkrecht" wird hier breit verstanden und umfasst auch einen Winkelbereich um 90°, der sich aus der horizontalen Abweichung aufgrund der Schwenkbewegung der Welle 20 ergibt. Mit anderen Worten: Es wird senkrecht zur Längserstreckung der Schweißnahtwurzel 11 geschliffen.

Es sind zweite Räder 13 zum Befahren der Oberfläche des Wärmetauschers 12 vorgesehen (siehe FIG 3), wobei die zweiten Räder 13 an der Außenseite des Rahmens 15 des Schleifkopfes und an der Außenseite des Rahmens 15 der beiden Antriebseinheiten 27 angebracht sind. Die zweiten Räder 13 sind zum Erzeugen eines Anpressdruckes an die Oberfläche des Wärmetauschers 12 gefedert am jeweiligen Rahmen 15 gelagert.

Der Schleifkopf 18 umfasst eine Kamera 21 zum Überwachen des Schleifprozesses, wobei die Kamera 21 in Vorwärtsbewegungsrichtung C des Manipulators 10 vor der Schleifscheibe 19 vorgesehen ist, und wobei die Kamera 21 am Rahmen 15 des Schleifkopfes 18 angebracht ist. Die Kamera 21 ist ferner am Rahmen 15 schwenkbar ausgebildet.

Ferner umfasst der Schleifkopf 18 eine Beleuchtungsvorrichtung 22 zur Beleuchtung der abzuschleifenden Schweißnahtwurzel 11, wobei die Beleuchtungsvorrichtung 22 in Vorwärtsbewegungsrichtung C des Manipulators 10 vor der Schleifscheibe 19 vorgesehen ist. Die Beleuchtungsvorrichtung 22 bildet eine bauliche Einheit mit der Kamera 21 aus.

Der Manipulator 10 umfasst am Schleifkopf 18 und an den Antriebseinheiten 27, einen Kabelbaum 23 zur Energieversorgung und/oder zur Signalübertragung. Der Kabelbaum 23 ist zur Verbindung des Manipulators 10 mit einer Kontrollstation (nicht in den Figuren dargestellt) vorgesehen.

Die Kontrollstation dient der Fernsteuerung des Manipulators 10, wobei das horizontale und die vertikal Verschwenken der Welle 20 des Manipulators 10 und die Bewegung der ersten Räder 16 der Antriebseinheiten 27 sowie die Drehgeschwindigkeit der Schleifscheibe 19 durch die Kontrollstation fernsteuerbar ist.

Das Schleifen der Schweißnahtwurzel 11 mit dem Manipulator 10 kann beispielsweise derart erfolgen, dass der Manipulator 10 zunächst eine bestimmte Position anfährt, und dann durch den Antrieb 26 vorwärts und rückwärts hin- und her bewegt wird, wobei die horizontale und vertikale Schwenkposition der Welle 20 durch einen Bediener anhand des von der Kamera 21 gelieferten Bildes variiert wird. Nach ausreichendem Abschleifen der Schweißnahtwurzel 11 an der angefahrenen Position wird der Manipulator 10 an eine weitere Position bewegt und führt hier das vorbeschriebenen Verfahren erneut aus.

Dazu umfasst die Kontrollstation einen Joystick zur Steuerung des Manipulators 10, eine Eingabevorrichtung, einen Monitor zum Anzeigen der von der Kamera 21 aufgenommenen Bilder und eine Energieversorgung.

### Bezugszeichenliste

- 10: Manipulator
- 11: Schweißnahtwurzel
- 12: Wärmetauscher
- 13: zweite Räder
- 14: erster Motor
- 15: Rahmen
- 16: erste Räder
- 17: Führungsschiene
- 18: Schleifkopf
- 19: Schleifscheibe
- 20: Welle
- 21: Kamera
- 22: Beleuchtungsvorrichtung
- 23: Kabelbaum
- 24: Halterung
- 25: zweiter Motor
- 26: Antrieb
- 27: Antriebseinheit
- 28: erste Schwenkeinheit
- 29: zweite Schwenkeinheit
- 30: erstes Getriebe
- 31: zweites Getriebe
- 32: Motor
- 33: flexible Kupplung
- 34: Grundplatte
- A: Längsachse
- B: Drehrichtung
- C: Vorwärtsbewegungsrichtung

## Patentansprüche

1. Manipulator (10) zum Bearbeiten von Schweißnahtwurzeln (11) an rekuperativen Wärmetauschern (12), umfassend
einen Antrieb (26) zur Fortbewegung des Manipulators (10),
einen Schleifkopf (18) mit einem Rahmen (15), an welchem, vorzugsweise vier, erste Räder (16) zum Fortbewegen des Schleifkopfes (18) auf Führungsschienen (17) vorgesehen, insbesondere angebracht, sind,
eine am Schleifkopf (18) vorgesehene, insbesondere angebrachte, Welle (20), wobei an der Welle (20) eine Schleifscheibe (19) zum Schleifen von Schweißnahtwurzeln (11) eines Wärmetauschers (12), vorgesehen ist,
**dadurch gekennzeichnet, dass** die Welle (20) horizontal und vertikal schwenkbar ist, um die Schleifscheibe (19) gezielt in Kontakt mit der Schweißnahtwurzel (11) zu bringen,
wobei die Drehrichtung der Schleifscheibe (19) an der zu bearbeitenden Schweißnahtwurzel (11) senkrecht zur Längserstreckung der zu bearbeitenden Schweißnahtwurzel (11) verläuft,
wobei zweite Räder (13) zum Befahren der Oberfläche des Wärmetauschers (12) vorgesehen sind, wobei die zweiten Räder (13) am Rahmen (15) des Schleifkopfes vorgesehen sind, wobei die zweiten Räder (13) zum Erzeugen eines Anpressdruckes an die Oberfläche des Wärmetauschers (12) gefedert am jeweiligen Rahmen (15) gelagert sind, und wobei der Manipulator (10) am Schleifkopf (18) eine erste Schwenkeinheit (28) für die horizontale Bewegung der Welle (20) umfasst, wobei die erste Schwenkeinheit (28) ein erstes Getriebe (30), und einen ersten Motor (14) zum Antrieb des ersten Getriebes (30) umfasst, und
dass der Manipulator (10) am Schleifkopf (18) eine zweite Schwenkeinheit (29) für die vertikale Bewegung der Welle (20) umfasst, wobei die zweite Schwenkeinheit (29) ein zweites Getriebe (31), und einen zweiten Motor (25) zum Antrieb des zweiten Getriebes (31) umfasst.

2. Manipulator (10) nach Anspruch 1, **dadurch gekennzeichnet, dass** das erste Getriebe (30) ein Schräg-Lineargetriebe ist und dass das zweite Getriebe (31), ein Kurvengetriebe ist.

3. Manipulator (10) nach Anspruch 1 oder 2, **dadurch gekennzeichnet, dass** eine Halterung (24), insbesondere ein Schwenklager, für die Welle (20) vorgesehen ist, wobei die Halterung am Schleifkopf (18), und insbesondere am oder nahe dem in Vorwärtsbewegungsrichtung (C) des Manipulators (10) hinteren Ende des Schleifkopfes (18), vorgesehen ist.

4. Manipulator (10) nach einem der vorhergehenden Ansprüche, **dadurch gekennzeichnet, dass** der Antrieb (26) wenigstens eine, vorzugweise zwei, Antriebseinheiten (27) zum Anschieben des Schleifkopfes (18) umfasst, wobei jede Antriebseinheit (27) einen Rahmen (15) aufweist, an welchem, vorzugsweise vier, erste Räder (16) zum Fortbewegen der Antriebseinheit (10) auf Führungsschienen (17) vorgesehen, insbesondere angebracht, sind, wobei jede Antriebseinheit (27) mindestens einen Motor (32) zum Antrieb der ersten Räder (16) der Antriebseinheit (27) umfasst.

5. Manipulator (10) nach Anspruch 4, **dadurch gekennzeichnet, dass** die wenigstens eine Antriebseinheit (27) und der Schleifkopf (18) und/oder die Antriebseinheiten (27) untereinander durch eine flexible Kupplung (33) verbunden sind, wobei die wenigstens eine Antriebseinheit (27) in Vorwärtsbewegungsrichtung (C) des Manipulators (10) hinter dem Schleifkopf (18) vorgesehen ist.

6. Manipulator (10) nach einem der vorhergehenden Ansprüche, **dadurch gekennzeichnet, dass** die Drehbewegung der Schleifscheibe (19) von einem dritten Motor, insbesondere einem externen Motor, angetrieben wird, und/oder dass die Drehrichtung der Schleifscheibe (19) an der zu bearbeitenden Schweißnahtwurzel (11) senkrecht zur Längserstreckung der zu bearbeitenden Schweißnahtwurzel (11) verläuft.

7. Manipulator (10) nach einem der vorhergehenden Ansprüche, **dadurch gekennzeichnet, dass** die zweiten Räder (13) an der Außenseite des Rahmens (15) des Schleifkopfes vorgesehen, insbesondere angebracht, sind und/oder dass zweite Räder (13) am Rahmen, insbesondere an der Außenseite des Rahmens (15), der wenigstens einen Antriebseinheit (27) vorgesehen, insbesondere angebracht, sind.

8. Manipulator (10) nach einem der vorhergehenden Ansprüche, **dadurch gekennzeichnet, dass** der Schleifkopf (18) eine Kamera (21) zum Überwachen des Schleifprozesses umfasst, wobei die Kamera (21) in Vorwärtsbewegungsrichtung (C) des Manipulators (10) vor der Schleifscheibe (19) vorgesehen ist, und wobei die Kamera (21) am Rahmen (15) des Schleifkopfes (18) vorgesehen, insbesondere angebracht, ist, und wobei die Kamera (21) vorzugsweise am Rahmen (15) schwenkbar ausgebildet ist.

9. Manipulator (10) nach Anspruch 8, **dadurch gekennzeichnet, dass** der Schleifkopf (18) eine Beleuchtungsvorrichtung (22) umfasst, insbesondere zur Beleuchtung der abzuschleifenden Schweißnahtwurzel (11), wobei die Beleuchtungsvorrichtung (22) in Vorwärtsbewegungsrichtung (C) des Manipulators (10) vor der Schleifscheibe (19) vorgesehen ist, und wobei die Beleuchtungsvorrichtung (22) vorzugsweise eine bauliche Einheit mit der Kamera (21) ausbildet.

10. Manipulator (10) nach einem der vorhergehenden Ansprüche, **dadurch gekennzeichnet, dass** der Manipulator (10), insbesondere am Schleifkopf (18) und/oder an der o- der den Antriebseinheiten (27), einen Kabelbaum (23) zur Energieversorgung und/oder zur Signalübertragung umfasst, wobei der Kabelbaum (23) zur Verbindung des Manipulators (10) mit einer Kontrollstation vorgesehen ist.

11. Manipulatoreinheit, umfassend einen Manipulator (10) nach einem der vorhergehenden Ansprüche, und eine Kontrollstation zur Steuerung, insbesondere Fernsteuerung, des Manipulators (10).

12. Manipulatoreinheit nach Anspruch 11, **dadurch gekennzeichnet, dass** der Manipulator (10) durch die Kontrollstation (23) fernsteuerbar ist, wobei das horizontale und das vertikale Verschwenken der Welle (20) des Schleifkopfes (18) und/oder Bewegung der ersten Räder (16) der wenigstens einen Antriebseinheit (27) und/oder die Drehgeschwindigkeit der Schleifscheibe (19) durch die Kontrollstation fernsteuerbar ist.

13. Manipulatoreinheit nach Anspruch 11 oder 12, **dadurch gekennzeichnet, dass** die Kontrollstation einen Joystick zur Steuerung des Manipulators (10) umfasst, und/oder eine Eingabevorrichtung, und/oder einen Monitor zum Anzeigen der von der Kamera (21) aufgenommenen Bilder und/oder eine Energieversorgung.

## Claims

1. Manipulator (10) for machining weld roots (11) on recuperative heat exchangers (12), comprising
a drive (26) for moving the manipulator (10),
a grinding head (18) with a frame (15) on which, preferably four, first wheels (16) for moving the grinding head (18) on guide rails (17) are provided, in particular attached, a shaft (20) provided and in particular attached to the grinding head (18), a grinding wheel (19) for grinding weld roots (11) of a heat exchanger (12) being provided on the shaft (20),
**characterized in that** the shaft (20) can be pivoted horizontally and vertically in order to bring the grinding wheel (19) into targeted contact with the weld root (11),
wherein the direction of rotation of the grinding wheel (19) at the weld root (11) to be worked is perpendicular to the longitudinal extent of the weld root (11),
wherein second wheels (13) are provided for traveling on the surface of the heat exchanger (12), wherein the second wheels (13) are provided on the frame (15) of the grinding head, wherein the second wheels (13) are spring-mounted on the respective frame (15) to generate a contact pressure on the surface of the heat exchanger (12), and wherein the manipulator (10) on the grinding head (18) comprises a first pivot unit (28) for the horizontal movement of the shaft (20), the first pivot unit (28) comprising a first gear (30) and a first motor (14) for driving the first gear (30), and
that the manipulator (10) comprises a second pivot unit (29) on the grinding head (18) for the vertical movement of the shaft (20), wherein the second pivot unit (29) comprises a second gear (31) and a second motor (25) for driving the second gear (31).

2. Manipulator (10) according to claim 1, **characterised in that** the first gear (30) is a helical linear gear and that the second gear (31) is a cam gear.

3. Manipulator (10) according to claim 1 or 2, **characterised in that** a mounting (24), in particular a pivot bearing, is provided for the shaft (20), wherein the mounting is provided on the grinding head (18), and in particular at or near the rear end of the grinding head (18) in the direction of forward movement (C) of the manipulator (10).

4. Manipulator (10) according to one of the preceding claims, **characterised in that** the drive (26) comprises at least one, preferably two, drive units (27) for pushing the grinding head (18), each drive unit (27) having a frame (15) on which, preferably four, first frames (16) for moving the drive unit (10) on guide rails (17) are provided, in particular mounted, wherein each drive unit (27) comprises at least one motor (32) for driving the first wheels (16) of the drive unit (27).

5. Manipulator (10) according to claim 4, **characterised in that** the at least one drive unit (27) and the grinding head (18) and/or the drive units (27) are connected to one another by a flexible coupling (33), wherein the at least one drive unit (27) is provided behind the grinding head (18) in the forward movement direction (C) of the manipulator (10).

6. Manipulator (10) according to one of the preceding claims, **characterised in that** the rotary movement of the grinding wheel (19) is driven by a third motor, in particular an external motor, and/or **in that** the direction of rotation of the grinding wheel (19) at the machining weld root (11) to be machined runs perpendicular to the longitudinal extension of the machining weld root (11) to be machined.

7. Manipulator (10) according to one of the preceding claims, **characterised in that** the second wheels (13) are provided, in particular mounted, on the outside of the frame (15) of the grinding head and/or **in that** second wheels (13) are provided, in particular mounted, on the frame, in particular on the outside of the frame (15), of the at least one drive unit (27).

8. Manipulator (10) according to one of the preceding claims, **characterised in that** the grinding head (18) comprises a camera (21) for monitoring the grinding process, wherein the camera (21) is provided in front of the grinding wheel (19) in forward movement direction (C) of the manipulator (10), and wherein the camera (21) is provided in particular mounted, on the frame (15) of the grinding head (18), and wherein the camera (21) is preferably designed to be pivotable on the frame (15).

9. Manipulator (10) according to claim 8, **characterised in that** the grinding head (18) comprises an illumination device (22), in particular for illuminating the machining weld root (11) to be ground off, wherein the illumination device (22) is provided in front of the grinding wheel (19) in the forward movement direction (C) of the manipulator (10), and wherein the illumination device (22) preferably forms a structural unit with the camera (21).

10. Manipulator (10) according to one of the preceding claims, **characterised in that** the manipulator (10), in particular on the grinding head (18) and/or on the drive unit(s) (27), comprises a cable harness (23) for power supply and/or for signal transmission, the cable harness (23) being provided for connecting the manipulator (10) to a control station.

11. Manipulator unit, comprising a manipulator (10) according to one of the preceding claims, and a control station for controlling, in particular remotely controlling, the manipulator (10).

12. Manipulator unit according to claim 11, **characterised in that** the manipulator (10) can be remotely controlled by the control station (23), wherein the horizontal and vertical pivoting of the shaft (20) of the grinding head (18) and/or movement of the first wheels (16) of the at least one drive unit (27) and/or the rotational speed of the grinding wheel (19) can be remotely controlled by the control station.

13. Manipulator unit according to claim 11 or 12, **characterised in that** the control station comprises a joystick for controlling the manipulator (10), and/or an input device, and/or a monitor for displaying the images recorded by the camera (21), and/or a power supply.

## Revendications

1. Manipulateur (10) pour l'usinage de racines de soudure (11) sur des échangeurs de chaleur à récupération (12), comprenant
un entraînement (26) pour déplacer le manipulateur (10),
une tête de meulage (18) avec un cadre (15), sur lequel sont prévues, en particulier montées, de préférence quatre premières roues (16) pour déplacer la tête de meulage (18) sur des rails de guidage (17),
un arbre (20) prévu, en particulier monté, sur la tête de meulage (18), dans lequel une meule (19) est prévue sur l'arbre (20) pour meuler des racines de soudure (11) d'un échangeur de chaleur (12),
**caractérisé en ce que** l'arbre (20) peut pivoter horizontalement et verticalement afin d'amener la meule (19) de manière ciblée en contact avec la racine de soudure (11), dans lequel le sens de rotation de la meule (19) sur la racine de soudure (11) à usiner est perpendiculaire à l'extension longitudinale de la racine de soudure (11) à usiner, dans lequel des deuxièmes roues (13) sont prévues pour circuler sur la surface de l'échangeur de chaleur (12), dans lequel les deuxièmes roues (13) sont prévues sur le cadre (15) de la tête de meulage, dans lequel les deuxièmes roues (13) sont montées sur le cadre (15) respectif de manière élastique pour générer une pression d'appui sur la surface de l'échangeur de chaleur (12), dans lequel le manipulateur (10) comprend sur la tête de meulage (18) une première unité de pivotement (28) pour le mouvement horizontal de l'arbre (20), dans lequel la première unité de pivotement (28) comprend une première transmission (30) et un premier moteur (14) pour l'entraînement de la première transmission (30), et
**en ce que** le manipulateur (10) comprend sur la tête de meulage (18) une deuxième unité de pivotement (29) pour le mouvement vertical de l'arbre (20), dans lequel la deuxième unité de pivotement (29) comprend une deuxième transmission (31), et un deuxième moteur (25) pour l'entraînement de la deuxième transmission (31).

2. Manipulateur (10) selon la revendication 1, **caractérisé en ce que** la première transmission (30) est une transmission linéaire oblique et **en ce que** la deuxième transmission (31) est une transmission à cames.

3. Manipulateur (10) selon la revendication 1 ou 2, **caractérisé en ce qu'**un support (24), en particulier un palier pivotant, est prévu pour l'arbre (20), dans lequel le support est prévu sur la tête de meulage (18), et en particulier sur ou à proximité de l'extrémité arrière de la tête de meulage (18) dans le sens de mouvement d'avance (C) du manipulateur (10).

4. Manipulateur (10) selon l'une quelconque des revendications précédentes, **caractérisé en ce que** l'entraînement (26) comprend au moins une, de préférence deux, unités d'entraînement (27) pour pousser la tête de meulage (18), dans lequel chaque unité d'entraînement (27) présente un cadre (15) sur lequel de préférence quatre premières roues (16) sont prévues, en particulier montées, pour déplacer l'unité d'entraînement (10) sur des rails de guidage (17), dans lequel chaque unité d'entraînement (27) comprend au moins un moteur (32) pour entraîner les premières roues (16) de l'unité d'entraînement (27).

5. Manipulateur (10) selon la revendication 4, **caractérisé en ce que** la au moins une unité d'entraînement (27) et la tête de meulage (18) et/ou les unités d'entraînement (27) sont reliées entre elles par un accouplement flexible (33), dans lequel la au moins une unité d'entraînement (27) est prévue derrière la tête de meulage (18) dans le sens de mouvement d'avance (C) du manipulateur (10).

6. Manipulateur (10) selon l'une quelconque des revendications précédentes, **caractérisé en ce que** le mouvement de rotation de la meule (19) est entraîné par un troisième moteur, en particulier un moteur externe, et/ou **en ce que** le sens de rotation de la meule (19) au niveau de la racine de soudure (11) à usiner s'étend perpendiculairement à l'extension longitudinale de la racine de soudure (11) à usiner.

7. Manipulateur (10) selon l'une quelconque des revendications précédentes, **caractérisé en ce que** les deuxièmes roues (13) sont prévues sur la face extérieure du cadre (15) de la tête de meulage et/ou **en ce que** des deuxièmes roues (13) sont prévues, en particulier montées, sur le cadre, en particulier sur la face extérieure du cadre (15), d'au moins une unité d'entraînement (27).

8. Manipulateur (10) selon l'une quelconque des revendications précédentes, **caractérisé en ce que** la tête de meulage (18) comprend une caméra (21) pour surveiller le processus de meulage, dans lequel la caméra (21) est prévue dans le sens de mouvement d'avance (C) du manipulateur (10) devant la meule (19), et dans lequel la caméra (21) est prévue, en particulier montée, sur le cadre (15) de la tête de meulage (18), et dans lequel la caméra (21) est de préférence réalisée de manière pivotante sur le cadre (15).

9. Manipulateur (10) selon la revendication 8, **caractérisé en ce que** la tête de meulage (18) comprend un dispositif d'éclairage (22), en particulier pour éclairer la racine de soudure (11) à meuler, dans lequel le dispositif d'éclairage (22) est prévu en amont de la meule (19) dans le sens de mouvement d'avance (C) du manipulateur (10), et dans lequel le dispositif d'éclairage (22) réalise de préférence une unité structurale avec la caméra (21).

10. Manipulateur (10) selon l'une quelconque des revendications précédentes, **caractérisé en ce que** le manipulateur (10) comprend, en particulier sur la tête de meulage (18) et/ou sur la ou les unités d'entraînement (27), un faisceau de câbles (23) pour l'alimentation en énergie et/ou la transmission de signaux, dans lequel le faisceau de câbles (23) est prévu pour relier le manipulateur (10) à une station de contrôle.

11. Unité de manipulation, comprenant un manipulateur (10) selon l'une quelconque des revendications précédentes, et une station de contrôle pour la commande, en particulier à distance, du manipulateur (10).

12. Unité de manipulation selon la revendication 11, **caractérisée en ce que** le manipulateur (10) peut être commandé à distance par la station de contrôle (23), dans laquelle le pivotement horizontal et le pivotement vertical de l'arbre (20) de la tête de meulage (18) et/ou le mouvement des premières roues (16) de la au moins une unité d'entraînement (27) et/ou la vitesse de rotation de la meule (19) peuvent être commandés à distance par la station de contrôle.

13. Unité de manipulateur selon la revendication 11 ou 12, **caractérisée en ce que** la station de contrôle comprend un joystick pour commander le manipulateur (10), et/ou un dispositif d'entrée, et/ou un moniteur pour afficher les images prises par la caméra (21), et/ou une alimentation en énergie.
